Europäisches Patentamt

European Patent Office

Office européen des brevets

(19)

(11) Veröffentlichungsnummer: **0 236 868 B1**

(12) **EUROPÄISCHE PATENTSCHRIFT**

(45) Veröffentlichungstag der Patentschrift: **15.01.92**

(21) Anmeldenummer: **87102758.7**

(22) Anmeldetag: **26.02.87**

(51) Int. Cl.⁵: **C21C 5/56**, C21C 5/32

(54) Verfahren zur Stahlherstellung aus Schrott.

(30) Priorität: **08.03.86 DE 3607777**

(43) Veröffentlichungstag der Anmeldung:
**16.09.87 Patentblatt 87/38**

(45) Bekanntmachung des Hinweises auf die
Patenterteilung:
**15.01.92 Patentblatt 92/03**

(84) Benannte Vertragsstaaten:
**AT DE ES FR GB NL**

(56) Entgegenhaltungen:
EP-A- 0 030 360
DE-B- 1 217 985
DE-C- 2 838 983
FR-A- 2 224 546

**IRON AND STEEL ENGINEER, Band 62, Nr. 10,
Oktober 1985, Seiten 16-22, Pittsburgh, Pennsylvania, US; J.E. BONESTELL et al.: "EOF
(energy optimizing furnace) steelmaking"**

(73) Patentinhaber: **KLÖCKNER CRA PATENT
GMBH
Klöcknerstrasse 29
W-4100 Duisburg(DE)**

(72) Erfinder: **Brotzmann, Karl, Prof. Dr. Dr.
Fentschstrasse 6
W-8458 Sulzbach-Rosenberg(DE)**
Erfinder: **Turner, Richard Edwin, Dr.**

**verstorben(DE)**

(74) Vertreter: **König, Reimar, Dr.-Ing. et al
Patentanwälte Dr.-Ing. Reimar König
Dipl.-Ing. Klaus Bergen Wilhelm-Tell-Strasse
14 Postfach 260162
W-4000 Düsseldorf 1(DE)**

EP 0 236 868 B1

# Beschreibung

Die Erfindung bezieht sich auf ein Verfahren zum Herstellen von Stahl aus Schrott in einem Frischgefäß mit einer Vorheizphase, Einschmelzphase und einer Frischphase, das über Einleitungsdüsen unterhalb der Stahlbadoberfläche und Aufblasvorrichtungen verfügt und bei dem kohlenstoffhaltige Festbrennstoffe sowie sauerstoffhaltige Gase als Reaktionspartner zum Einsatz kommen und der Heizwert der kohlenstoffhaltigen Festbrennstoffe im Wege einer Nachverbrennung der gasförmigen Reaktionsprodukte mittels vorgewärmter Luft weiter ausgenützt wird.

Zu dem relevanten Stand der Technik auf diesem Gebiet gehören bereits Verfahren, bei denen Kohle und Koks als Energieträger, zusammen mit Sauerstoff als Oxydant, zum Einschmelzen von Schrott dienen. Ein sehr vorteilhafter Prozeß dieser Gattung ist in dem deutschen Patent 28 38 983 beschrieben.

Bei diesen bekannten Verfahren werden kohlenstoffhaltige Brennstoffe und Sauerstoff unterhalb der Badoberfläche der Schmelze zugeführt, wobei man Sayerstoff zusätzlich in Form eines Freistrahls auf die Badoberfläche bläst, dadurch die Reaktionsgase nachverbrennt und einen wesentlichen Teil der dabei entstehenden Energie an das Bad überträgt. Optimale Werte lassen sich bei diesem Verfahren dann erreichen, wenn etwa 70 % der erforderlichen Sauerstoffmenge auf das Bad geblasen und der restliche Sauerstoff zusammen mit der Kohle unterhalb der Badoberfläche in die Schmelze gelangt. Unter diesen Bedingungen werden bei dem Prozeß Nachverbrennungsgrade bis etwa 30 % erreicht, wobei der Wirkungsgrad bei der Rückübertragung der Verbrennungsenergie an das Bad etwa bei 80 % liegt. Die restlichen 20 % der Verbrennungswärme verbleiben im Abgas und führen demgemäß zu einer Erhöhung der Abgastemperatur.

Es hat sich weiterhin bei der Anwendung des Verfahrens gezeigt, daß eine Steigerung des Nachverbrennungsgrades im allgemeinen zu einer Verschlechterung des Wirkungsgrades bei der Rückübertragung der gewonnen Wärme an das Bad führt. In der Praxis bedeutet eine um etwa 20 % geringere wärmeübertragung eine Abgastemperaturerhöhung von ca. 200 °C. Somit ist etwa bei einem Nachverbrennungsgrad der Abgase von 30 % unter den genannten Voraussetzungen eine praktische Grenze für die Anwendung des Verfahrens gegeben, da eine weitere Steigerung der Nachverbrennung die Haltbarkeit der feuerfesten Zustellung durch die erhöhte Temperaturbelastung zu stark beeinträchtigt. Allerdings sind die Vorteile des bekannten Verfahrens erheblich, da beispielsweise bei der Verwndung von Koks als Brennstoff und einer Nachverbrennungsrate von ca. 30 % gegenüber einem Verfahren ohne Nachverbrennung etwa die 1.5-fache Wärmemenge zur Verfügung steht.

Bekannt ist aus "Iron and Steel Engineer" 62, 1985, No. 10, Seiten 16 bis 22 auch ein Verfahren, bei dem vorgeheizter Schrott in ein Bad aus flüssigem Eisen und flüssiger Schlacke chargiert wird und der Kohlenstoffgehalt der Schmelze vor dem Schrottchargieren durch Einblasen von Kohlenstoff in die Eisenschmelze eingestellt werden kann. Nach dem Chargieren des Schrotts wird die Schmelze gefrischt und gleichzeitig die nächste Schrottcharge räumlich getrennt von der Schmelze mit Hilfe des Abgases aus der Frischreaktion vorgeheizt. Die heißen Abgase des Schrottvorheizens dienen zum Erwärmen von Luft für die Nachverbrennung der die Schmelze verlassenden Reaktionsgase oberhalb der Badoberfläche. Bei diesem Verfahren wird ein heißer Schrott in eine verhältnismäßig große Eisenschmelze chargiert; es besteht daher nicht die Gefahr eines Einfrierens der Schmelze. Diese Gefahr besteht auch nicht bei einem aus der deutschen Auslegeschrift 28 38 983 bekannten Verfahren, bei dem zunächst flüssiges Roheisen und Schrott in einen Konverter chargiert und die Schmelze durch kombiniertes Blasen gefrischt wird.

Die Aufgabe der vorliegenden Erfindung ist darin zu sehen, ein Verfahren zu entwickeln, das es ermöglicht, den Heizwert der kohlenstoffhaltigen Festbrennstoffe bei der Erzeugung von Stahl aus Schrott besser auszunützen und somit das Wärmeeinbringen, und damit die Wirtschaftlichkeit, zu steigern, und darüber hinaus ein betrieblich einfach anwendbares Verfahren für die Stahlherstellung aus Schrott zu finden.

Die Lösung dieser Aufgabe besteht darin, daß bei einem Verfahren der eingangs erwähnten Art erfindungsgemäß sowohl in der Vorheizphase als auch in der Einschmelzphase dem Schrott und der sich bildenden Schmelze Wärme aus der Verbrennung von Festbrennstoffen sowie aus der Nachverbrennung auf 800 bis 1300 °C vorgewärmter Luft zugeführt wird und daß, sobald sich Schmelze im Frischgefäß und an der Schrottoberfläche gebildet hat, die gleichen kohlenstoffhaltigen Festbrennstoffe gleichzeitig durch Bodendüsen und Aufblasdüsen von unten und oben in das Frischgefäß eingeblasen werden.

Bei dem erfindungsgemäßen Verfahren wird somit zunächst Schrott in ein Frischgefäß, beispielsweise in einen Konverter mit Düsen vorzugsweise aus konzentrischen Rohren unterhalb der Badoberfläche chargiert. Die Düsen liegen unterhalb der Badoberfläche, wenn der gesamte Einsatz flüssig ist; sie können im Boden und/oder in der Seitenwandung des Gefäßes angeordnet sein. Weitere Düsen und/oder eine Lanze befinden sich oberhalb der Badoberfläche.

Mit dem Schrott können Festbrennstoffe chargiert werden, die beim Vorheizen und Einschmelzen des Schrotts mit Hilfe des über die Düsen im unteren Bereich des Frischgefäßes eingeblasen Sauerstoffs verbrannt werden. Sobald sich aus dem vorgeheizten Schrott Schmelze gebildet hat oder auch flüssiges Roheisen nachchargiert worden ist, werden pulverförmige Brennstoffe in das Frischgefäß geblasen.

Das erfindungsgemäße Verfahren läuft in drei Phasen ab, der Vorheizphase, der Einschmelzphase und der Frischphase. In allen drei Phasen unterliegen die in dem Frischgefäß anfallenden Verbrennungs- bzw. Frischgase einer Nachverbrennung. Lediglich in der Frischphase - insbesondere gegen Frischende - kann sich unter Umständen eine Nachverbrennung erübrigen.

Sowohl in der Vorheiz- als auch in der Einschmelzphase wird dem Schrott und der sich bildenden Schmelze Wärme aus der Verbrennung von Festbrennstoffen sowie aus der Nachverbrennung mit vorgewärmter Luft zugeführt.

Gemäß der Erfindung kann das Verfahren mit Luft beliebiger Vorwärmtemperatur betrieben werden. Ein bevorzugter Temperaturbereich für die Luftvorwärmung liegt zwischen etwa 800 bis 1300°C. Beispielsweise können mit Heißwind von etwa 1200°C optimale Nachverbrennungsraten sowohl beim Schrottvorheizen in der Schrotteinschmelzphase und in der eigentlichen Schmelzphase erreicht werden.

Im Vergleich zu der Anwendung von Sauerstoff für die Nachverbrennung und der damit gewonnenen Erfahrung, konnte überraschenderweise festgestellt werden, daß der Nachverbrennungsgrad sich wesentlich steigern läßt, wenn anstelle von Sauerstoff Luft, vorzugsweise auf ca. 800 bis 1300°C vorgeheizt, in Form eines Freistrahls zur Anwendung kommt. Sowohl beim Vorheizen und Einschmelzen des Schrottes als auch beim Aufblasen auf die Schmelze ließ sich dieser unvorhersehbare Effekt feststellen. Zum Beispiel konnten in der Einschmelzphase Nachverbrennungsgrade von 60 bis 70 % und in der Schmelzphase von 40 bis 60 % bei guter Rückübertragung, d.h. mit einem Wirkungsgrad von mehr als 80 % der entstehenden Wärme an den Schrott bzw. die Schmelze, erreicht werden. Demgemäß beträgt die Abgastemperatursteigerung maximal 200°C und führt zu keiner übermäßigen Belastung der feuerfesten Ausmauerung im Frischgefäß.

Gemäß der Erfindung sind zur Erzielung einer guten Rückübertragung der Nachverbrennungsenergie an das Schrotthaufwerk bzw. an die Schmelze, die Aufblasvorrichtungen, vorzugsweise Düsen in der feuerfesten Ausmauerung im oberen Bereich der Frischgefäße oder entsprechend ausgebildete Lanzen, so angeordnet, daß zwischen dem Düsenvordruck (Druck vor der Düsenöffnung), dem Düsendurchmesser und dem Abstand zwischen Düsenöffnung und Auftreffstelle die folgende Beziehung besteht:

$$D \cdot \sqrt{P} = \frac{L}{(8 \text{ bis } 12)}$$

P = Düsenvordruck der Luft
D = Düsendurchmesser
L = Lauflänge des Aufblasstrahles

Bei dem erfindungsgemäßen Verfahren bestehen die eingesetzten, kohlenstoffhaltigen Festbrennstoffe in erster Linie aus Kohle und/oder Koks, beispielsweise kann Koks auch zusammen mit Schrott in das Frischgefäß chargiert werden.

Gemäß der Erfindung kann die Zugabe der festen, kohlenstoffhaltigen Energieträger in verschiedener Weise erfolgen. So können zum Beispiel Koks und/oder Kohle in stückiger Form bevorzugt vor die Sauerstoffeinleitungsdüsen, die sich unterhalb der Badoberfläche der Stahlschmelze befinden, und im Boden und/oder in der unteren Seitenwand angeordnet sind, chargiert werden. Beispielsweise können vier Sauerstoffeinleitungsdüsen mit Schutzmediumummantelung am Umfang des Frischgefäßes im unteren Wandbereich angeordnet sein, und dann kann man z.B. stückigen Koks vor diese Sauerstoffdüsen chargieren.

Eine bevorzugte Ausgestaltung der Erfindung besteht darin, Koks und/oder Kohle staubförmig durch Düsen in das Frischgefäß zu blasen. Es hat sich als vorteilhaft herausgestellt, wenn der Auftreffbereich der kohlenstoffhaltigen Festbrennstoffe an der Schrottoberfläche bereits aufgeschmolzen ist. Dies kann beispielsweise durch zusätzliche Energiezufuhr mittels besonderer Brenner, aber auch mit elektrischer Energie geschehen. Falls die Schrottoberfläche nicht auf- oder angeschmolzen ist, kann der Brennstoffstrahl die Schrottoberfläche sogar kühlen, und es kommt zu einer unerwünschten Kohlenstaubentwicklung im Frischgefäß.

Gemäß der Erfindung können beim Einblasen der kohlenstoffhaltigen Festbrennstoffe durch Düsen unterhalb der Badoberfläche in deren Nähe auch gleichzeitig Sauerstoffeinleitungsdüsen angeordnet sein, und zwar so, daß die Blasstrahlen etwa in die gleiche Richtung weisen, um beispielsweise beim Schrottheizen im gleichen Bereich auf die Schrottoberfläche aufzutreffen. Eine vorteilhafte Einblaseinrichtung kann eine Düse aus drei konzentrischen Rohren sein, bei der durch das Zentralrohr beispielsweise pulverförmige Kohle, im ersten Ringkanal Sauerstoff und im zweiten Ringkanal das Düsenschutzmedium strömen. Ähnlich gut bewährt haben sich die sogenannten Ringschlitzdüsen, wie sie die deutsche Patentschrift 24 38 142 beschreibt.

Eine weitere vorteilhafte Ausgestaltung des erfindungsgemäßen Verfahrens besteht darin, einen Teil der kohlenstoffhaltigen Festbrennstoffe zusammen mit dem Nachverbrennungsstrahl aufzublasen. Dabei hat es sich überraschenderweise gezeigt, daß bereits kurze Zeit nach Beginn des Blasens mit dem Heißwindaufblasstrahl die Schrottoberfläche im Bereich der Auftreffstelle flüssig ist und daß die Brennstoffpartikel von der flüssigen Oberfläche aufgenommen werden, dort mit dem Sauerstoff reagieren und somit durch die Wärmeentwicklung das Schrotteinschmelzen begünstigen. Erfindungsgemäß kommen dabei kohlenstoffhaltige Festbrennstoffe, beispielsweise Kohlesorten verschiedener Korngröße, zur Anwendung. Optimale Werte hinsichtlich der Heizwertausnutzung dieser Brennstoffe kann man erreichen, wenn für die Zeit, in der der Nachverbrennungsstrahl auf festen Schrott trifft, pulverförmige Kohle mit einem maximalen Teilchendurchmesser von etwa 0.1 mm zum Einsatz kommt und danach gröbere Kohle bis etwa 1 mm Teilchengröße angewendet wird, d.h. dann, wenn der Nachverbrennungsstrahl bevorzugt auf Schmelze trifft.

Die das Frischgefäß verlassenden Abgase haben bei der Durchführung des erfindungsgemäßen Verfahrens während der Schrottvorheiz- und -einschmelzphase einen Oxidationsgrad von ca. 60 bis 80 % und während der Frischphase von etwa 40 bis 50 %. Die Abgase der ersten Phase lassen sich zum Vorheizen von Schrott ausnutzen, indem ihre fühlbare Wärme an den Schrott übertragen wird. Dabei wird das Wärmeangebot durch Einleiten von Heißluft zur Vollverbrennung der Abgase weiter gesteigert werden.

Die Abgase aus der zweiten Frischphase können getrennt erfaßt und beispielsweise zum Heizen eines Rekuperators, wie z.B. eines Pebble Heaters, zur Anwendung kommen, da ihr verhältnismäßig geringer Kohlenmonoxydgehalt von beispielsweise 10 bis 20 % eine Verwendung als Reduktionsgas nicht erlaubt.

Zur Erläuterung der vorliegenden Erfindung dient das nachfolgende, nichteinschränkende Beispiel.

In einem 60 t-Herdofengefäß, das ungefähr die Abmessung eines entsprechenden Elektroofens aufweist, befinden sich im Boden und unmittelbar über dem Boden gleichmäßig verteilt in der Seitenwand je vier Sauerstoffeinleitungsdüsen mit einem lichten Durchmesser von 8 mm. Durch jede Düse bläst man ca. 2 $Nm^3$ Sauerstoff/min. Stückiger Koks in Portionen von jweils 250 kg befindet sich vor diesen Düsen.

Im Ofendeckel befinden sich, etwa oberhalb der Sauerstoffeinleitungsdüsen aus konzentrischen Rohren, vier Heißluftdüsen mit einem Durchmesser von ca. 20 cm. Zusätzlich zudem genannten Koks, der mit dem Schrott zusammen chargiert wird, bläst man insgesamt etwa 5 t Kohle in das Frischgefäß. Etwa die Hälfte davon zusammen mit dem Heißwind durch ein Zentralrohr in den genannten Heißwindeinleitungsdüsen, und die restliche Kohle wird durch vier Kohleeinleitungsdüsen, die in der Nähe der genannten Sauerstoffeinleitungsdüsen angeordnet sind, eingeblasen.

Bei der Durchführung des erfindungsgemäßen Verfahrens wird zu Beginn durch die Bodendüsen Sauerstoff und durch die Aufblasdüsen zunächst nur Heißwind in das Frischgefäß eingeleitet. Nach ca. 3 min beginnt das Kohleeinblasen, und zwar gleichzeitig durch die Boden- und die Aufblasdüsen. Die Einblasrate beträgt etwa 15 kg/Düse und Minute. Es hat sich als vorteilhaft erwiesen, zunächst feinkörnige Kohle mit einem maximalen Teilchendurchmesser von etwa 0.1 mm während der ersten 15 min Blasezeit einzuleiten und dann mindestens in den Aufblasstrahlen auf eine gröbere Kohle mit einer maximalen Teilchengröße von etwa 1 mm umzuschalten.

**Patentansprüche**

1. Verfahren zum Herstellen von Stahl aus Schrott in einem Frischgefäß mit einer Vorheizphase, Einschmelzphase und einer Frischphase, das über Einleitungsdüsen unterhalb der Stahlbadoberfläche und Aufblasvorrichtungen verfügt und bei dem kohlenstoffhaltige Festbrennstoffe sowie sauerstoffhaltige Gase als Reaktionspartner zum Einsatz kommen und der Heizwert der kohlenstoffhaltigen Festbrennstoffe im Wege einer Nachverbrennung der gasförmigen Reaktionsprodukte mittels vorgewärmter Luft weiter ausgenützt wird, mit der Maßgabe, daß sowohl in der Vorheizphase als auch in der Einschmelzphase dem Schrott und der sich bildenden Schmelze Wärme aus der Verbrennung von Festbrennstoffen sowie aus der Nachverbrennung mit auf 800 bis 1300 ° C vorgewärmter Luft zugeführt wird und daß, sobald sich Schmelze im Frischgefäß und an der Schrottoberfläche gebildet hat, die gleichen kohlenstoffhaltigen Festbrennstoffe gleichzeitig durch Bodendüsen und Aufblasdüsen von unten und von oben in das Frischgefäß eingeblasen werden.

2. Verfahren nach Anspruch 1, dadurch gekennzeichnet, daß für den Betrieb der Aufblasvorrichtungen zwischen dem Düsenvordruck des Heißwindes P, dem Düsendurchmesser D und der Lauflänge des Aufblasgasstrahls L, d.h. dem Abstand zwischen Düsenöffnung und der Auftreffstelle, folgende Beziehung eingehalten wird

$$D \cdot \sqrt{P} = \frac{L}{(8 \text{ bis } 12)}$$

3. Verfahren nach den Ansprüchen 1 und 2, dadurch gekennzeichnet, daß unterschiedliche Mengenverhältnisse der Reaktionspartner während der Schrottvorheizphase, der Einschmelzphase und der Schmelzphase zugegeben werden.

4. Verfahren nach einem oder mehreren der Ansprüche 1 bis 3, dadurch gekennzeichnet, daß kohlenstoffhaltige Festbrennstoffe mit unterschiedlicher Teilchengröße eingesetzt werden.

5. Verfahren nach Anspruch 4, dadurch gekennzeichnet, daß während der Schrottvorheiz- und -einschmelzphase kohlenstoffhaltige Brennstoffe mit einem maximalen Teilchendurchmesser von ca. 0.1 mm eingesetzt werden.

## Claims

1. A process for the manufacture of steel from scrap in a refining vessel with a preheating phase, a melting-down phase and a refining phase, having feed nozzles below the surface of the steel bath and top-blowing devices, and in which carbonaceous solid fuels and oxygen-containing gases are used as reagents and the calorific value of the carbonaceous solid fuels is further utilized by way of after-burning the gaseous reaction products by means of preheated air, with the proviso that in both the preheating phase and in the melting-down phase heat from the combustion of solid fuels and from the after-burning with air that has been preheated to 800 to 1300°C is supplied to the scrap and to the melt forming therefrom, and that as soon as melt has formed in the refining vessel and on the surface of the scrap the same carbonaceous solid fuels are blown simultaneously into the refining vessel from below and from the top through bottom nozzles and top-blowing nozzles.

2. A process according to claim 1, characterised in that in the operation of the top-blowing devices, the relation between the nozzle inlet pressure of the hot blast P, the nozzle diameter D and the path length L of the top-blowing gas jet, i.e. the distance between the nozzle opening and the point of impingement, is as follows:

$$D \cdot \sqrt{P} = L/(8 \text{ to } 12).$$

3. A process according to claims 1 and 2, characterised in that different proportions of the reagents are used during the scrap preheating phase, the melting-down phase and the melt phase.

4. A process according to one or more of claims 1 to 3, characterised in that carbonaceous solid fuels of different particle sizes are used.

5. A process according to claim 4, characterised in that carbon-containing fuels having a maximum particle size of about 0.1 mm are used during the scrap preheating and melting-down phases.

## Revendications

1. Procédé d'élaboration de l'acier à partir de ferrailles dans un récipient d'affinage, qui comporte une phase de préchauffage, une phase de fusion et une phase d'affinage et fait intervenir des tuyères d'amenées situées au-dessous de la surface du bain d'acier et des dispositifs de soufflage par en haut, dans lequel des combustibles solides contenant du carbone et des gaz contenant de l'oxygène participent aux réactions et dans lequel le pouvoir calorifique des combustibles solides contenant du carbone est ultérieurement utilisé dans une combustion complémentaire des produits de réaction gazeux au moyen d'air préchauffé, caractérisé en ce que c'est aussi bien pendant la phase de préchauffage que pendant la phase de fusion que s'effectue l'apport aux ferrailles et au bain formé de la chaleur dégagée par la combustion de combustibles solides ainsi que par la combustion complémentaire avec de l'air préchauffé à une température de 800 à 1300°C et que, dès que le bain est formé dans le récipient d'affinage et à la surface de la scorie, les mêmes combustibles contenant du carbone sont soufflés dans le récipient d'affinage simultanément par en bas et par en haut, par des tuyères de fond et par des tuyères de soufflage par en-haut.

2. Procédé selon la revendication 1, caractérisé en ce que, pour le fonctionnement des dispositifs de soufflage par en haut, la pression P du vent chaud en avant des tuyères, le diamètre D des tuyères et la longueur L du jet de gaz soufflé par en haut, c'est-à-dire la distance entre l'orifice de la tuyère et la zone d'impact du jet, sont reliés par la formule suivante :

$$D \cdot \sqrt{P} = \frac{L}{(8 \quad \text{à} \quad 12)}$$

3. Procédé selon l'une des revendications 1 ou 2, caractérisé en ce que pendant la phase de préchauffage des ferrailles, la phase de début de fusion et la phase de fusion, les corps intervenant dans les réactions sont introduits en quantités différentes.

4. Procédé selon une ou plusieurs des revendications 1 à 3, caractérisé en ce que les combustibles solides contenant du carbone utilisés ont des granulométrie différentes.

5. Procédé selon la revendication 4, caractérisé en ce que, pendant la phase de préchauffage des ferrailles et la phase de fusion, les combustibles contenant du carbone utilisés ont une granulométrie d'environ 0,1 mm au maximum.